# EUROPÄISCHE PATENTSCHRIFT

(11) **EP 2 459 426 B1**
(45) Veröffentlichungstag und Bekanntmachung des Hinweises auf die Patenterteilung: **06.05.2015**
(21) Anmeldenummer: 10736687.4
(22) Anmeldetag: 22.07.2010
(51) Int. Cl.: B60T 13/74, H04J 3/06, H04L 7/033

(54) **ELEKTRONISCHES BREMSSYSTEM UND VERFAHREN ZUM BETRIEB EINES ELEKTRONISCHEN BREMSSYSTEMS**
ELECTRONIC BRAKING SYSTEM AND METHOD FOR OPERATING AN ELECTRONIC BRAKING SYSTEM
SYSTÈME DE FREINAGE ÉLECTRONIQUE ET PROCÉDÉ PERMETTANT DE FAIRE FONCTIONNER UN SYSTÈME DE FREINAGE ÉLECTRONIQUE

(30) Priorität: 31.07.2009 DE 102009035630; 21.07.2010 DE 102010031608
(43) Veröffentlichungstag der Anmeldung: 06.06.2012
(73) Patentinhaber: Continental Teves AG & Co. oHG, 60488 Frankfurt (DE)
(72) Erfinder: GEYER, Bernd, 60489 Frankfurt (DE); SCHADE, Kai, 64839 Münster (DE)
(86) Internationale Anmeldenummer: PCT/EP2010/060596
(87) Internationale Veröffentlichungsnummer: WO 2011/012522

(56) Entgegenhaltungen:
- WO-A1-98/36956
- DE-A1- 10 123 568
- DE-A1-102006 024 957
- DE-A1-102006 032 726
- DE-A1-102007 028 002

## Beschreibung

Die Erfindung betrifft ein elektronisches Bremssystem bzw. ein Verfahren zum Betrieb gemäß dem Oberbegriff sed Anspruchs 1 bzw. 9.

So ein Bremssystem bzw. Verfahren geht z.B. aus DE-A-10 2006 032726 hervor.

Zukünftige Bremsanlagen werden voraussichtlich zunehmend über elektromechanische betätigbare Radbremsen verfügen. Bekannte elektromechanisch betätigbare Radbremsen umfassen neben einem elektromechanischen Aktuator eine elektronische Steuer- und Regeleinheit (Wheel Control Unit, WCU). In der elektronischen Steuer- und Regeleinheit wird gewöhnlich ein Datenverarbeitungsprogramm (Applikation/Software) durchgeführt, welches aus verschiedenen Eingangsdaten Steuersignale zur Ansteuerung des elektromechanischen Aktuators zur Erzeugung der gewünschten Bremskraft bestimmt.

Aus der internationalen Patentanmeldung WO 2008/155341 A1 ist eine kombinierte Bremsanlage mit hydraulisch betätigbaren Radbremsen an einer ersten Achse und elektromechanisch betätigbaren Radbremsen an einer zweiten Achse bekannt. Der ersten Fahrzeugachse ist dabei eine elektrohydraulische Steuer- und Regeleinheit zugeordnet und jedem elektromechanischen Aktuator der zweiten Achse ist eine elektronische Steuer- und Regeleinheit zugeordnet. Die Steuer- und Regeleinheiten sind über Datenbusse miteinander verbunden.

Bei einer klassischen funktionellen Aufteilung bezüglich der Hardware- und Softwarekomponenten arbeitet die zugeordnete prozessorbasierte Steuereinheit (WCU) auf Basis einer Sensor-gestützten Regelung. Diese Regelung vermag eine maximale Anzahl von Iterationen (Berechnungen) pro Sekunde zu leisten. Beispielsweise entspricht einer Iterationsrate von 200 s⁻¹ einer Software-Loop-Zeit von 5 ms. Stell- und Regelvorgänge erfolgen üblicherweise im Zeitraster dieser Software-Loop Zeit.

Bekannte rein elektrohydraulische Bremssysteme verfügen üblicherweise über eine zentrale elektrohydraulischen Steuer- und Regeleinheit (HECU), z. B. ein ESP-Aggregat (ESP: elektronisches Stabilitätsprogramm), welche auf Basis ihrer Software-Loop-Zeit Ventile ansteuert, um die Bremsdruckregelung und damit die Verzögerung des Fahrzeugs zu erreichen.

Kombinierte Bremsanlagen mit hydraulisch und elektromechanisch betätigbaren Radbremsen (EMB), wie beispielsweise die in der WO 2008/155341 A1 offenbarte Bremsanlage, hingegen verfügen z. B. über ein ESP-Aggregat als Zentralregler (Master), welcher auf Basis der (seiner) Software-Loop-Zeit Kommunikations-Botschaften zu anderen Knoten (Slaves) des Netzwerks sendet (z. B. an die WCU) und quasi per "Fernsteuerung" die Sollgrößen (z. B. für die einzustellende Bremskraft) vorgibt. In diesem Fall werden die Ventile (Bremskraft) nicht mehr radindividuell direkt (zentral) gesteuert. Stattdessen sendet das ESP-Aggregat anhand von Kommunikations-Botschaften der EMB die Sollspannkraft, worauf die jeweilige EMB autonom die Istspannkraft entsprechend einregelt. Die elektrische Bremse ist somit Teil eines Systemverbunds.

Ein offensichtlicher Nachteil derartiger Bremsanlagen im Stand der Technik liegt in dem losen zeitlichen Zusammenhang der Software-Loop-Zeiten von ESP-Zentralregler (Master) und EMB (Slave). Sind diese nicht aufeinander abgestimmt, kann eine vom Zentralregler versandte und von der EMB empfangene Botschaft unter Umständen eine gewisse Zeit unberücksichtigt bleiben, bevor die EMB dem geänderten Spannkraftsollwert nachkommt, da die aktuelle Iterationsschleife (der Software) noch beendet werden muss. Dieser Verzug ist bei einer plötzlichen Bremsanforderung als sicherheitsrelevant einzustufen: Der Bremsvorgang kann beispielsweise in einer Gefahrensituation insgesamt verspätet eingeleitet werden. In anderen Fällen können die Spannkraftsollwerte verspätet und zu unterschiedlichen Zeiten eingestellt werden, wodurch die Stabilität des Fahrzeuges während des Bremsvorgangs gefährdet wird.

Die sicherheitsrelevanten Probleme entstehen auch bei der Versendung der Spannkraft-Istwerte, welche nach Übertragung von der EMB zwar dem ESP-Zentralregler logisch in Form von Botschaften bereits vorliegen, welche aber aufgrund des nicht optimalen Zeitpunkts des Empfangs vor einer Berücksichtigung durch die ESP-Software zunächst die Beendigung der aktuellen Software-Loop des Zentralreglers abwarten müssen. Die hoch getaktete Iterationsrate von 200 oder mehr Berechnungen pro Sekunde wird im Verbund eines Systems mit verteilten Steuer- und Regeleinheiten ohne festen zeitlichen Bezug der verteilten Knoten zueinander effektiv in der Größenordnung der zusätzlichen Totzeiten entlang des Hin- und Rück-Kanals reduziert. Entsprechend sinkt das Verzögerungsvermögen des Fahrzeugs.

Der Erfindung liegt daher die Aufgabe zu Grunde, ein elektronisches Bremssystem bereitzustellen, bei dem eine zeitliche Abstimmung zwischen einer einem elektromechanischen Aktuator zugeordneten elektronischen Steuer- und Regeleinheit und einer weiteren Steuer- und Regeleinheit des Bremssystems realisiert wird. Weiterhin sollen ein zugehöriges Betriebsverfahren sowie ein Kraftfahrzeug mit einem derartigen Bremssystem bereitgestellt werden.

In Bezug auf das Bremssystem wird die oben genannte Aufgabe erfindungsgemäß durch den Kennzeichen gemäß Anspruch 1 bzw. 9 gelöst.

Unter "Loop-Zeit" bzw. "Software-Loop-Zeit" wird die Laufzeit einer (Haupt)Schleife der Applikation (Software) der entsprechenden Steuer- und/oder Regeleinheit bezeichnet. Eine solche "Loop-Zeit" liegt gewöhnlich im Bereich von einigen Millisekunden (z. B. 10 ms). Vorteilhafte Ausgestaltungen der Erfindung sind Gegenstand der Unteransprüche.

Der Erfindung liegt der Gedanke zu Grunde, dass bei Bremssystemen, die nach dem Master-Slave-Prinzip aufgebaut sind und bei denen eine Mastereinheit mit mehreren, elektromechanisch betätigbaren Bremsen zugeordneten Slaves kommuniziert, und bei denen die Slaves gewissermaßen eigenständig das Zuspannen der Bremsen auf Veranlassung von Nachrichten des Masters veranlassen, die Zeitspanne zwischen Übermittlung der Sollspannkraft durch den Master und Einstellung der Spannkraft durch den jeweiligen Slave so gering wie möglich gehalten werden sollte. Bei einer zu großen zeitlichen Lücke zwischen den Zeitpunkten, zu denen die Master-Einheit die Sollspannkräfte bestimmt und den Zeitpunkten, an denen diese von den Slaves eingestellt werden, wird eine Einregelung der Spannkräfte mit minimalem und möglichst konstantem Phasenversatz extrem erschwert. In extremem Gefahrsituationen, in denen eine schnelle zeitliche Abfolge von unterschiedlichen Spannungen eingestellt werden müssen, können Ist- und Sollspannkräfte derart außer Phase geraten, dass das Fahrzeug nicht genug stabilisiert oder rechtzeitig zum Stehen gebracht werden kann.

Die Nachrichten der Master-Einheit sollten also in einem Zeitintervall innerhalb der Software-Loop-Zeit bei den Slaves eintreffen, in dem sie im Wesentlichen unverzüglich ausgewertet und bearbeitet werden können, also gewissermaßen in einem Sollankunftszeitfenster. Absendezeitpunkt der Nachrichten des Master und Sollankunftszeitfenster sollten also - möglichst ständig - "in Phase" miteinander sein. Bei einem normalen und unsynchronisierten Betrieb von Master und Slaves liegt eine solche phasenstarre Beziehung gewöhnlich nicht vor.

Wie nunmehr erkannt wurde, lässt sich eine derartige Synchronisation erreichen, indem die Software-Loop-Zeit des jeweiligen Slaves - über einen oder mehrere Zyklen - veränderbar ist, und zwar solange, bis die Ankunft der Nachrichten der Master-Einheit in das Sollankunftszeitfenster des/ der Slaves fällt. Diese Anpassung sollte über einen Datenbus erfolgen, der die Master-Einheit mit der jeweiligen Slave-Einheit verbindet. Das heißt, die Software-Loop-Zeit einer einem elektromechanischen Aktuator zugeordneten elektronischen Steuer- und/oder Regeleinheit soll über den, insbesondere CAN-, Datenbus veränderbar sein. Es sind aber auch andere, im Verhältnis zur Slave-Einheit externe Mittel anwendbar und denkbar. Beispielsweise kann eine separate Clockleitung bzw. separate Triggerleitung eingesetzt werden, welche z. B. zyklisch wechselnde Muster führt und damit das Zeitfenster aufprägt.

Beispielsgemäß wird daher vorgeschlagen, eine Synchronisation der Software-Loop-Zeiten von Knoten in einem verteilten System gegenüber einer gemeinsamen Referenz durchzuführen. Dadurch wird innerhalb eines spezifizierten Rahmens eine gewisse Phasenstarre erreicht.

Das Bremssystem umfasst die dem elektromechanischen Aktuator zugeordnete elektronische Steuer- und/oder Regeleinheit (WCU) ein Mittel, welches die Loop-Zeit des Datenverarbeitungsprogramms zur Steuerung und/oder Regelung des elektromechanischen Aktuators an die Ankunft von Nachrichten mit einer Zeitmarke, welche über den Datenbus empfangen werden, anpasst. Die Ankunftszeit der Nachrichten kann durch dieses Mittel in ein Sollankunftszeitfenster der WCU gelegt werden, wodurch eine unmittelbare Bearbeitung der Nachrichten gewährleistet wird. Somit können bei Übermittlung von Sollspannkräften diese sofort eingestellt werden, und unmittelbar anschließend die Istspannkraftwerte zurück an die zentrale Steuer- und Regeleinheit übermittelt werden. Dieses Mittel kann beispielsweise die Durchführung einer Differenzmessung umfassen, wobei der zeitliche Versatz zwischen tatsächlichem Ankunftszeitpunkt und idealer Lage innerhalb des Sollankunftszeitfensters gemessen wird.

Vorteilhafterweise umfassen die Nachrichten mit einer Zeitmarke zusätzlich weitere Daten. Auf diese Weise müssen diese zusätzlichen Daten nicht durch separate Nachrichten übermittelt werden, so dass die Anzahl der in einem gewissen Zeitintervall zu übermittelnden Nachrichten möglichst gering gehalten wird.

Für eine effektive Kommunikation und Synchronisation werden die Nachrichten mit einer Zeitmarke von der weiteren Steuer- und/oder Regeleinheit (ECU) vorteilhafterweise periodisch, insbesondere zeitäquidistant, versendet. Auch Datennachrichten können eineindeutig in Inhalt, Kennung und Versendezeitpunkt definiert werden und damit als Zeitmarke fungieren.

Vorteilhafterweise versendet die dem elektromechanischen Aktuator zugeordnete elektronische Steuer- und/oder Regeleinheit (WCU), insbesondere ausschließlich, unmittelbar nach dem Empfang einer Nachricht mit Zeitmarke ihrerseits eine Nachricht. Durch diese Maßnahme wird das Zeitintervall zwischen dem Versand dieser Nachricht und dem nächsten Empfang einer Nachricht mit Zeitmarke möglichst groß gehalten, wodurch Kollisionen dieser Nachrichten miteinander vermieden werden können.

In einer bevorzugten Ausführungsform des Bremssystems wird die Loop-Zeit des Datenverarbeitungsprogramms zur Steuerung bzw. Regelung des elektromechanischen Aktuators in Abhängigkeit von den empfangenen Zeitmarken für eine vorgegebene Anzahl von Loops um ein begrenztes Maß verkürzt oder verlängert. Dadurch kann das Sollempfangsfenster in Bezug auf die Zeitmarken zeitlich verschoben werden, d. h., gewissermaßen kann das Sollempfangsfenster in Bezug auf die Zeitmarken vor- und zurück gespult werden. Die befristet begrenzt verlängerte bzw. verkürzte Applikations-Loop-Zeit wird dabei vorteilhafterweise in für die Regelung vernachlässigbarem zeitlichen Rahmen, variiert: die Loop-Zeit wird vorzugsweise jeweils deutlich weniger als um 10 % verlängert bzw. verkürzt.

Bei der weiteren Steuer- und/oder Regeleinheit handelt es sich vorteilhafterweise um eine zentrale elektronische oder elektrohydraulische Steuer- und/oder Regeleinheit, welche zur direkten oder indirekten Steuerung aller Radbremsen geeignet ist.

Vorzugsweise verfügen die weiteren, insbesondere die zentrale, Steuer- und/oder Regeleinheit sowie jede der den elektromechanischen Aktuatoren zugeordneten elektronischen Steuer- und/oder Regeleinheiten jeweils über eigene Intelligenz und umfassen jeweils mindestens einen Mikrocomputer. Die den elektromechanischen Aktuatoren zugeordneten elektronischen Steuer- und/oder Regeleinheiten (WCU) sind vorteilhafterweise jeweils in der Nähe des zugehörigen Rades angeordnet.

Bevorzugt umfasst das Bremssystem Raddrehzahlsensoren, deren Signale der zentralen elektronischen oder elektrohydraulischen Steuer- und/oder Regeleinheit (ECU) und/oder den elektronischen Steuer- und Regeleinheiten (WCU) der elektromechanischen Aktuatoren zugeführt werden.

Vorteilhafterweise umfasst das Bremssystem eine zentrale elektronische oder elektrohydraulische Steuer- und/oder Regeleinheit (ECU) und mindestens zwei jeweils durch einen elektromechanischen Aktuator betätigbare Radbremsen, mit jeweils einer den elektromechanischen Aktuatoren zugeordneten elektronischen Steuer- und/oder Regeleinheit (WCU), wobei jede den elektromechanischen Aktuatoren zugeordnete elektronische Steuer- und/oder Regeleinheit (WCU) mittelbar oder unmittelbar über einen Datenbus, insbesondere einen CAN (Controller Area Network)-Datenbus, mit der zentralen Steuer- und/oder Regeleinheit (ECU) verbunden ist. Die zentrale Steuer- und/oder Regeleinheit (ECU) steuert zumindest zeitweise zumindest eine der den elektromechanischen Aktuatoren zugeordnete elektronische Steuer- und/oder Regeleinheit (WCU) an.

Gemäß einer vorteilhaften Weiterbildung umfasst das Bremssystem zwei einer zweiten Fahrzeugachse zugeordnete, durch elektromechanische Aktuatoren betätigbare Radbremsen sowie zwei einer ersten Fahrzeugachse zugeordnete, elektromechanisch oder hydraulisch betätigbare Radbremsen, wobei die zentrale elektronische oder elektrohydraulische Steuer- und/oder Regeleinheit (ECU) zum Regeln der der ersten Fahrzeugachse zugeordneten Radbremsen ausgebildet ist.

Die zentrale Steuer- und/oder Regeleinheit (ECU) ist bevorzugt als eine elektrohydraulische Steuer- und Regeleinheit (HECU) ausgebildet. Sie verfügt vorteilhafterweise über eine Einrichtung zur Durchführung einer Antiblockierfunktion (ABS) und/oder eine fahrdynamische Stabilitätsfunktion (ESP). Entsprechende Bremskraftvorgaben werden von der zentralen Steuer- und/oder Regeleinheit (ECU) an die den elektromechanischen Aktuatoren zugeordneten elektronischen Steuer- und/oder Regeleinheiten (WCU) über den Datenbus (CAN-Bus) übertragen.

Die Software eines mechatronischen Radbremsaktuators (ElektroMechanische Bremse, EMB) wird über externe Mittel, z. B. die Bus-Kommunikation, in Ihrer zeitlichen Abarbeitungsreihenfolge beeinflusst.

Vorteilhafterweise wird die Applikations-Loop-Zeit der regelnden Software der elektromechanischen Bremse auf feste Zeitmarken in Form von empfangenen CAN-Botschaften synchronisiert. Diese CAN-Botschaften werden vom Versender periodisch oder sogar streng zeitäquidistant versandt.

Gemäß einer bevorzugten Weiterbildung des Verfahrens versendet die elektromechanische Bremse ihre CAN-Botschaft unmittelbar als Reaktion auf eine empfangene CAN-Botschaft. Dies schließt eine Kollision mit der nächsten Empfangsbotschaft aus und gewährleistet somit die zeitäquidistante Versendung der als Zeitmarker fungierenden Botschaften des Versenders (aufgrund nun genannter Kollisionsfreiheit). Es wird nicht die gemäß CAN-Spezifikation zulässige Möglichkeit zur Arbitrierung von Botschaften genutzt.

Von der zentralen Steuer- und/oder Regeleinheit (ECU) werden wiederkehrend, insbesondere in einem fest vorgegebenen Zeitabstand, Nachrichten mit einer Zeitmarke an die dem elektromechanischen Aktuator zugeordnete elektronische Steuer- und/oder Regeleinheit (WCU) gesendet. Diese wertet die Ankunftszeiten der Nachrichten zur Zeit-Synchronisation mit der zentralen Steuer- und/oder Regeleinheit (ECU) aus.

Bevorzugt steuert die zentrale Steuer- und/oder Regeleinheit (ECU) zumindest zeitweise die dem elektromechanischen Aktuator zugeordnete elektronische Steuer- und/oder Regeleinheit (WCU) an, z. B. gibt die zentrale Steuer- und/oder Regeleinheit (ECU) der dem elektromechanischen Aktuator zugeordnete elektronische Steuer- und/oder Regeleinheit (WCU) Sollwerte für die einzuregelnde Bremskraft vor.

In Bezug auf das Kraftfahrzeug wird die oben genannte Aufgabe erfindungsgemäß gelöst mit einem oben genannten Bremssystem.

Die Vorteile der Erfindung liegen insbesondere darin, dass durch eine Veränderung der Software-Loop-Zeit des Datenverarbeitungsprogrammes zur Steuerung bzw. Regelung eines elektromechanischen Aktuators über einen Datenbus eine im Wesentlichen verzögerungs- und totzeitfreie Bearbeitung von übermittelten Nachrichten bzw. Botschaften erfolgen und damit eine unmittelbare Reaktion auf den Inhalt dieser Nachrichten erfolgen kann.

Ein Ausführungsbeispiel der Erfindung wird anhand einer Zeichnung näher erläutert. Darin zeigen in stark schematisierter Darstellung:
- FIG. 1: ein Verfahren zum Betreiben eines elektronischen Bremssystems in einer bevorzugten Ausführungsform,
- FIG. 2: ein Bremssystem in einer bevorzugten Ausführungsform, das mit dem Verfahren aus FIG. 1 betrieben wird, und
- FIG. 3: ein Kraftfahrzeug mit einem Bremssystem gemäß FIG. 2.

Gleiche Teile sind in allen Figuren mit denselben Bezugszeichen versehen.

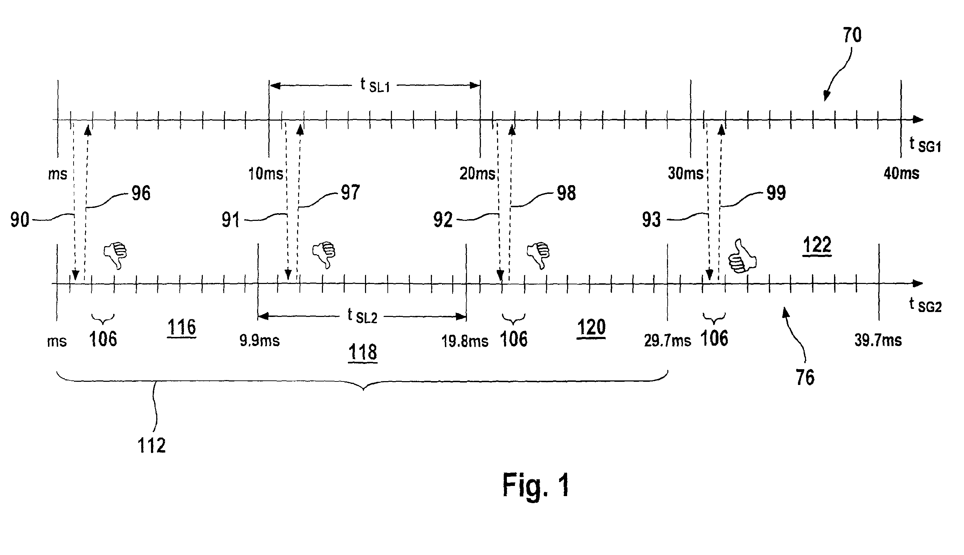

Bei dem in FIG. 1 dargestellten Verfahren zum Betreiben eines Bremssystems werden zwischen einem ersten Steuergerät, dem Master (nicht dargestellt) und einem zweiten Steuergerät, dem Slave (nicht dargestellt), Botschaften ausgetauscht. Dargestellt sind für das erste Steuergerät bzw. Steuergerät 1 die zugehörige Zeitachse 70, auf der die Zeit t_{SG1} aufgetragen ist sowie die zum zweiten Steuergerät bzw. Steuergerät 2 zugehörige Zweitachse 76, auf der die Zeit t_{SG2} aufgetragen ist. In beiden Fällen sind auch die Loop-Zeiten kenntlich gemacht, t_{SL1} für das Steuergerät 1 und t_{SL2} für das Steuergerät 2.

Das erste Steuergerät schickt an das zweite Steuergerät in regelmäßigen Abständen Fragebotschaften 90, 91, 92, 93. Das Steuergerät 2 schickt Antwortbotschaften 96, 97, 98, 99 an das erste Steuergerät.

Die vom ersten Steuergerät abgeschickten Fragebotschaften sollen das zweite Steuergerät in einem Sollankunftszeitfenster 106 erreichen. Das Sollankunftszeitfenster 106 ist derart ausgelegt, dass Fragebotschaften, die das zweite Steuergerät innerhalb dieses Fensters erreichen, unmittelbar und im Wesentlichen ohne Verzögerung bearbeitet werden können.

Der Datenbus ist bei dem in FIG. 1 dargestellten Verfahren als CAN-Bus ausgelegt. Bei Verwendung eines CAN-gestützten Netzwerks wird zur Synchronisation beispielsgemäß die periodische (insbesondere strikt zeit-äquidistante) Versendung von Botschaften durch den Master (z. B. Zentralregler, hier Steuergerät 1) genutzt. Die kontinuierlich, in gleichen Abständen versandten Fragebotschaften 90, 91, 92, 93 dienen gleichermaßen der Datenübertragung und dem Setzen von Zeitmarken.

Diese periodisch von Steuergerät 2 sowie weiteren Slaves (weiteren Steuer- und Regeleinheiten) empfangenen Fragebotschaften 90, 91, 92, 93 werden hinsichtlich ihrer Ankunftszeit relativ zu der Software-Loop-Zeit t_{SL2} bewertet und mit dem (vorgegebenen) gewünschten Ankunftszeitfenster bzw. Sollankunftszeitfenster 106 abgeglichen. Ein zeitlicher Versatz wird durch eine entsprechende sukzessive Anpassung der Software-Loop-Zeit t_{SL2} kompensiert, bis der ideale Phasenbezug von Software-Loop-Zeit des Slaves (z. B. WCU), im vorliegenden Fall von Steuergerät 2, zur Software-Loop-Zeit des Masters (z. B. ECU), im vorliegenden Fall von Steuergerät 1, hergestellt ist. Damit ist die Übertragungs-Latenz minimal, die Reaktionsgeschwindigkeit maximal, der Phasenversatz quasi konstant, die Applizierung der Reglerkoeffizienten des Reglers mit Bezug auf die Strecke wird vereinfacht und es wird die beste Regelperformance erreicht, was kürzeste Bremswege bedeutet.

Beispielhaft kann die Loop-Zeit über einen Timer (der z. B. als Hardware-Modul eines Mikrocontrollers realisiert ist) festgelegt und erzeugt werden. Bei benötigter Anpassung in Richtung des Sollankunftsfensters kann der Timer für begrenzte Dauer in begrenztem Maße in seiner Zählweise/Arbeitsweise umgestellt werden. Dies ist beispielsweise durch einen geänderten Minimal/Maximal-Wert und/oder eine angepasste Zählgeschwindigkeit zu erreichen.

Um sicherzustellen, dass die als Zeitmarker fungierenden Botschaften - die Fragebotschaften 90, 91, 92, 93 - nicht mit anderen Botschaften kollidieren, wird im vorliegenden Ausführungsbeispiel auf eine kollisionsfreie Kommunikationsmethode zurückgegriffen. Hierzu wird ein Frage-Antwort-Totzeit-Frage-Antwort-Totzeit-...-Prinzip angewendet. Wie FIG. 1 entnehmbar ist, sendet der Master (Steuergerät 1, z. B. Zentralregler) jeweils eine Fragebotschaft 90, 91, 92, 93 (Request) von definierter Länge in zeit-äquidistanten Abständen - dies wird auch "timebased Transmission" (zeitbasierte Sendung von Requests) genannt. Der Slave (Steuergerät 2, z. B. WCU) sendet jeweils eine Antwortbotschaft 96, 97, 98, 99 (Response), ebenfalls von definierter Länge, unmittelbar jeweils nach Empfang der Request-Botschaft bzw. der Fragebotschaft 90, 91, 92, 93 - dies wird als "eventbased Transmission" (eventbasierte Sendung von Responses) bezeichnet. Die zeitliche Dauer der Versendung der Response bzw. Antwortbotschaft 96, 97, 98, 99 überschreitet niemals die Dauer der Pause zwischen den Requests bzw. Fragebotschaften 96, 97, 98, 99. Dadurch ist sichergestellt, dass Requests und Responses niemals kollidieren, was die Synchronisation aktiv unterstützt.

Zur Synchronisation der Software-Loop-Zeit t_{SL1} von Steuergerät 1 und der Software-Loop-Zeit t_{SL2} von Steuergerät 2 verkürzt Steuergerät 2 (Slave, z. B. WCU) seine Software-Loop-Zeit t_{SL2} in jedem Zyklus, bis die die Zeitmarke darstellende/enthaltende Botschaft hinsichtlich ihrer Ankunftszeit innerhalb des (vorgegebenen) gewünschten Ankunftszeitfensters bzw. Sollankunftszeitfensters 106 liegt. Dargestellt sind vier Zyklen 116, 118, 120, 122, deren zeitliche Länge jeweils der Software-Loop-Zeit t_{SL2} entspricht. Im ersten Zyklus 116 verkürzt Steuergerät 2 seine Software-Loop-2eit t_{SL2} um 0,1 ms von 10 ms auf 9,9 ms. Dadurch wird erreicht, dass sich der Zeitpunkt, an dem das Steuergerät 2 die Fragebotschaft 91 empfängt, im Verhältnis zum zeitlichen Beginn seines Zyklus nach hinten verschiebt. Weitere zeitliche Verschiebungen um 0,1 ms finden in den Zyklen 118 und 120 statt.

Im vierten Zyklus, Zyklus 122, erreicht die Fragebotschaft 93 das Steuergerät 2 im Sollankunftszeitfenster 106. Da die Software-Loop-Zeiten t_{SL1} und t_{SL2} im vorliegenden Fall übereinstimmen, erfolgt auch in den nachfolgenden Zyklen der Empfang der Fragebotschaften jeweils in dem Sollankunftszeitfenster 106. Der Algorithmus zur Überwachung, und ggf. Wiedergewinnung, der Synchronisation ist idealerweise permanent aktiv. Eine Anpassung wird bedarfsgerecht eingeleitet, wenn ein Synchronisationsverlust (die Fragebotschaften verlassen das Sollankunftszeitfensters) detektiert wurde. Das kann unter Umständen durch nicht vermeidbare Ursachen wie Frequenzungenauigkeiten durch Bauteiltoleranzen der taktgebenden Bauteile (Quartz), Frequenzdrifts der Quartze aufgrund Temperaturschwankungen, kurzzeitige lokale oder globale Spannungsausfällen (z. B. ein Wackelkontakt am Stecker) bei einem oder bei mehreren Steuergeräten notwendig werden. Der ganz reguläre Fall einer notwendigen Synchronisation ist das "Aufsynchronisieren" nach dem Kaltstart/ Erststart des Fahrzeugs (Einschalten der Zündung), bei welchem der Steuergeräte- bzw. SG-Verbund zuvor deaktiviert/ ausgeschaltet/schlafend war.

In anderen Anwendungsfällen kann auch die Software-Loop-Zeit t_{SL2} über eine Anzahl von Zyklen verlängert werden, um den Abgleich von Ankunftszeiten und Sollankunftszeitfenster zu erreichen. Auch Kombinationen von Verlängerungen und Verkürzungen sind möglich.

Wie im Zusammenhang mit FIG. 1 erläutert wird zur Synchronisation der Applikations-Loop-Zeit der regelnden Software der EMB (Steuergerät 2) auf die externen, von Steuergerät 1 versendeten Zeitmarken (CAN-Botschaften) die Applikations- bzw. Software-Loop-Zeit kurzzeitig verlängert bzw. verkürzt. So wird eine Art "Spuleffekt" der Zeitbasen der beiden Steuergeräte zueinander erzielt. Die befristet begrenzt verlängerte bzw. verkürzte Applikations-Loop-Zeit innerhalb der Zyklen 116, 118, 120 (gekennzeichnet durch eine geschweifte Klammer 112) wird in für die Regelung vernachlässigbarem zeitlichen Rahmen variiert (<< 10 %).

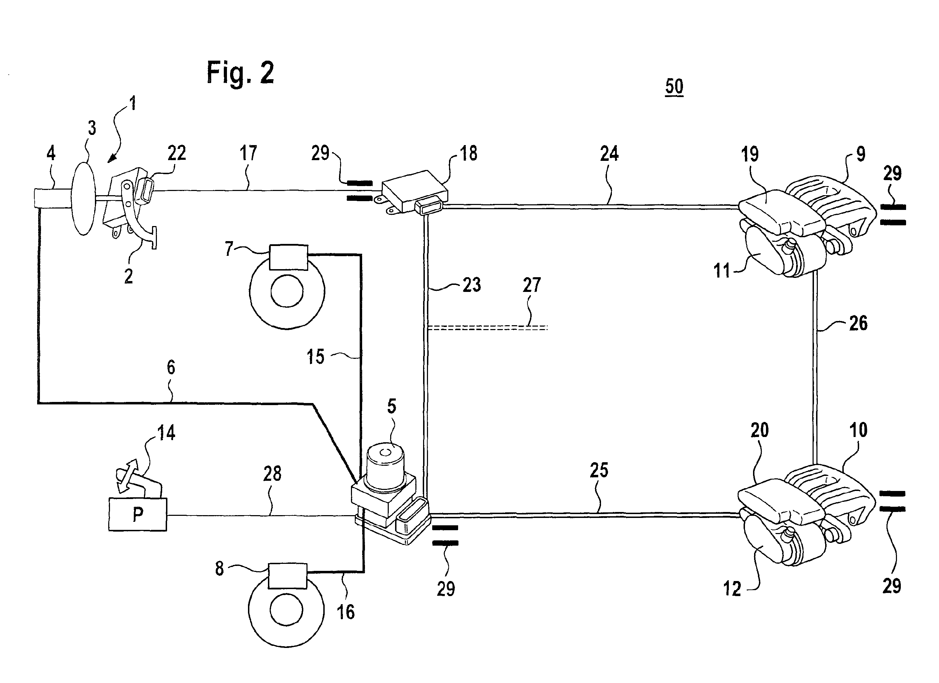

In FIG. 2 ist ein Bremssystem 50 in einer bevorzugten Ausführungsform dargestellt. Das Bremssystem 50 weist im Wesentlichen eine Betätigungseinheit 1 auf, die mittels eines Bremspedals 2 betätigbar ist. Die Betätigungseinheit 1 besteht ihrerseits aus einem pneumatischen Bremskraftverstärker bzw. einem Unterdruckbremskraftverstärker 3 sowie einem dem Unterdruckbremskraftverstärker 3 nachgeschalteten Hauptbremszylinder 4, mit dem mittels einer hydraulischen Leitung 6 eine elektrohydraulische Steuer- und Regeleinheit 5 verbunden ist. An die elektrohydraulische Steuer- und Regeleinheit 5 sind mittels hydraulischer Leitungen 15, 16 hydraulisch betätigbare Radbremsen 7, 8 angeschlossen, die im gezeigten Beispiel einer ersten Fahrzeugachse, z. B. Vorderachse, zugeordnet sind.

Wie FIG. 2 weiterhin entnehmbar ist, sind einer zweiten Fahrzeugachse, z. B. der Hinterachse, Radbremsen 9, 10 zugeordnet, deren Betätigung nach Maßgabe des in den hydraulisch betätigbaren Radbremsen 7, 8 eingesteuerten hydraulischen Druckes durch elektromechanische Aktuatoren 11, 12 erfolgt. Der erwähnte hydraulische Druck wird mit Hilfe von nicht gezeigten Drucksensoren ermittelt, die in der elektrohydraulischen Steuer- und Regeleinheit 5 integriert sind. Auf Grundlage dieses Druckwertes werden die elektromechanisch betätigbaren Radbremsen 9, 10 angesteuert, d. h. unter Berücksichtigung einer Bremskraftverteilungsfunktion zwischen Vorder- und Hinterachse wird eine Zuspannkraft der Radbremsen 9, 10 eingestellt. Außerdem können die elektromechanisch betätigbaren Bremsen 9, 10 nach Maßgabe des Betätigungsweges des Bremspedals 2, d. h. gemäß dem Fahrerverzögerungswunsch, angesteuert werden. Zu diesem Zweck wird der Betätigungsweg des Bremspedals 2 mit Hilfe eines vorzugsweise redundant ausgeführten Pedalwegsensors 22 ermittelt. Die Ansteuerung der der Hinterachse zugeordneten Radbremsen 9, 10 wird dezentral durch je eine elektronische Steuer- und Regeleinheit (WCU) 19, 20 vorgenommen.

Wie in FIG. 2 lediglich schematisch angedeutet ist, ist das dargestellte Bremssystem 50 bzw. die Bremsanlage beispielsgemäß mit einer Feststellbremsfunktionalität ausgestattet. Zu diesem Zweck weisen die elektromechanisch betätigbaren Radbremsen 9, 10 nicht gezeigte Feststellbremsvorrichtungen auf, mit denen die Radbremsen 9, 10 im zugespannten Zustand verriegelbar sind. Die Feststellbremsvorrichtungen sind mit Hilfe eines Bedienelementes 14 ansteuerbar, das z. B. als Taster ausgebildet ist und drei Schaltstellungen für die Befehle "Spannen", "Neutral" und "Lösen" aufweist. Beispielsgemäß werden die Ausgangssignale des Pedalwegsensors 22 über eine Signalleitung 17 einer weiteren elektronischen Steuer- und Regeleinheit 18 zugeführt, die beispielsweise durch einen Chassiscontroller gebildet werden kann. Die Steuer- und Regeleinheit 18 ist eine optionale Komponente des Bremssystems 50, auf die verzichtet werden kann. Die Signalleitung 17 kann in diesem Fall als zwei getrennte Signalleitungen ausgebildet sein, wobei die eine Signalleitung direkt mit der elektronischen Steuer- und Regeleinheit 19 und die andere Signalleitung direkt mit der elektronischen Steuer- und Regeleinheit 20 verbunden ist.

Ein erster Hochgeschwindigkeitsbus 23 bildet eine unmittelbare Verbindung zwischen der vorhin erwähnten elektrohydraulischen Steuer- und Regeleinheit (HECU) 5 und der weiteren (optionalen) elektronischen Steuer- und Regeleinheit 18, die mittels eines weiteren Hochgeschwindigkeitsbusses 24 mit der elektronischen Steuer- und Regeleinheit 19 des elektromechanischen Aktuators 11 unmittelbar verbunden ist. Die Hochgeschwindigkeitsbusse 23 und 24 sind bei einer Ausführungsform des Bremssystems ohne die Steuer- und Regeleinheit 18 gewöhnlich identisch. Eine zweite Signalleitung 28 dient der Signalübertragung zwischen dem Feststellbrems-Bedienelement 14 und der elektrohydraulischen Steuer- und Regeleinheit (HECU) 5, die mittels eines dritten Hochgeschwindigkeitsbusses 25 mit der elektronischen Steuer- und Regeleinheit 20 des elektromechanischen Aktuators 12 unmittelbar verbunden ist, so dass die Ausgangssignale des Feststellbrems-Bedienelementes 14 der genannten elektronischen Steuer- und Regeleinheit 20 zugeführt werden. Ein vierter Hochgeschwindigkeitsbus 26 bildet eine unmittelbare Verbindung zwischen den elektronischen Steuer- und Regeleinheiten 20 und 19 der elektromechanischen Aktuatoren 12 und 11.

Die gestrichelt gezeichnete Linie 27 stellt eine optional vorhandene Leitung zu ggf. weiteren Steuer- und Regeleinheiten dar. Mit dem Bezugszeichen 29 sind sämtliche Stromversorgungsanschlüsse der in FIG. 2 gezeigten Elemente bezeichnet.

Alternativ ist es möglich (nicht in einer Figur dargestellt), dass keine elektronische Steuer- und Regeleinheit 18 vorhanden ist und die Signalübertragung zwischen dem Pedalwegsensor 22 und den elektronischen Steuer- und Regeleinheiten 19 und 20 der elektromechanischen Aktuatoren 11, 12 über Signalleitungen geschieht, während die HECU 5 unmittelbar über einen Hochgeschwindigkeitsbus mit der elektronischen Steuer- und Regeleinheit 19 des elektromechanischen Aktuators 11 verbunden ist.

Bei den Hochgeschwindigkeitsbussen 23 bis 26 handelt es sich bevorzugt um einen CAN-Datenbus.

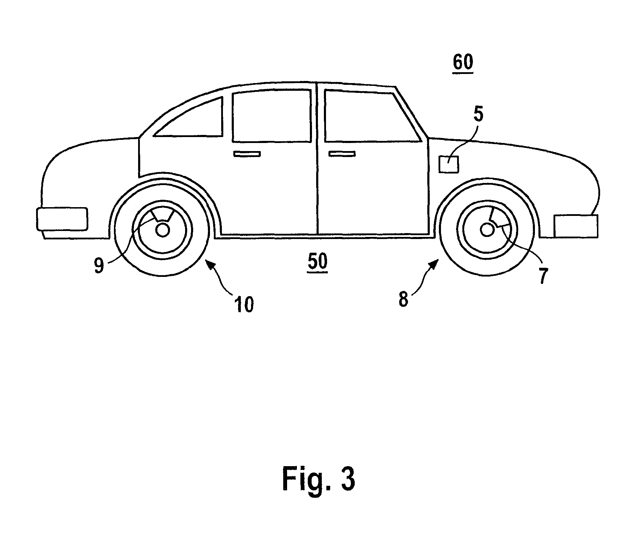

Ein Kraftfahrzeug 60 mit dem in FIG. 2 dargestellten Bremssystem 50 mit der Steuer- und Regeleinheit 5 ist in FIG. 3 dargestellt. Die Radbremsen 7 und 8 (nicht dargestellt) sind hydraulisch, die Radbremsen 9 und 10 (nicht dargestellt) sind elektromechanisch betätigbar.

### Bezugszeichenliste

- 1: Betätigungseinheit
- 2: Bremspedal
- 3: Unterdruckbremskraftverstärker
- 4: Hauptbremszylinder
- 5: elektrohydraulische Steuer- und Regeleinheit
- 6: hydraulische Leitung
- 7, 8, 9, 10: Radbremse
- 11, 12: elektromechanischer Aktuator
- 14: Feststellbrems-Bedienelement
- 17: Signalleitung
- 18, 19, 20: elektronische Steuer- und Regeleinheit
- 22: Pedalwegsensor
- 23, 24, 25, 26: Hochgeschwindigkeitsbus
- 27: Linie
- 28: Signalleitung
- 29: Stromversorgungsanschlüsse
- 50: Bremssystem
- 60: Kraftfahrzeug
- 70: Zeitachse von Steuergerät 1
- 76: Zeitachse von Steuergerät 2
- 90, 91, 92, 93: Fragebotschaft
- 96, 97, 98, 99: Antwortbotschaft
- 106: Sollankunftszeitfenster
- 112: geschweifte Klammer
- 116, 118: Zyklus
- 120, 122: Zyklus
- t_{SG1}: Zeit von Steuergerät 1
- t_{SG2}: Zeit von Steuergerät 2
- t_{SL1}: Software-Loop-Zeit von Steuergerät 1
- t_{SL2}: Software-Loop-Zeit von Steuergerät 2

## Patentansprüche

1. Elektronisches Bremssystem (50), insbesondere für Kraftfahrzeuge (60), mit mindestens einer durch einen elektromechanischen Aktuator (11, 12) betätigbaren Radbremse (7, 8, 9, 10), wobei dem elektromechanischen Aktuator (11, 12) eine elektronische Steuer- und/oder Regeleinheit (WCU) (18, 19, 20) zugeordnet ist, in welcher ein Datenverarbeitungsprogramm zur Steuerung bzw. Regelung des elektromechanischen Aktuators (11, 12) ausgeführt wird, und mit einem Datenbus, insbesondere einem CAN (Controller Area Network)-Datenbus, mit welchem die dem elektromechanischen Aktuator (11, 12) zugeordnete elektronische Steuer- und/oder Regeleinheit (WCU) (18, 19, 20) mit mindestens einer weiteren Steuer- und/oder Regeleinheit (ECU), insbesondere einer zentralen elektronischen oder elektrohydraulischen Steuer- und/oder Regeleinheit (5), verbunden ist, wobei die Loop-Zeit des Datenverarbeitungsprogramms zur Steuerung und/oder Regelung des elektromechanischen Aktuators (11, 12) über den Datenbus veränderbar ist und wobei die dem elektromechanischen Aktuator (11, 12) zugeordnete elektronische Steuer- und/oder Regeleinheit (WCU) (18, 19, 20) ein Mittel umfasst, welches die Loop-Zeit des Datenverarbeitungsprogramms zur Steuerung und/oder Regelung des elektromechanischen Aktuators (11, 12) an die Ankunft von Nachrichten mit einer Zeitmarke, welche über den Datenbus empfangen werden, anpasst, **dadurch gekennzeichnet, dass** zur Anpassung der Loop-Zeit des Datenverarbeitungsprogramms in der dem elektromechanischen Aktuator (11, 12) zugeordneten elektronischen Steuer- und/oder Regeleinheit (WCU) (18, 19, 20) die Ankunftszeit einer Nachricht mit Zeitmarke mit einem vorgegebenen Ankunftszeitfenster der Loop-Zeit des Datenverarbeitungsprogramms verglichen wird.

2. Bremssystem (50) nach Anspruch 1, **dadurch gekennzeichnet, dass** die Nachrichten mit einer Zeitmarke zusätzlich weitere Daten umfassen.

3. Bremssystem (50) nach Anspruch 1 oder 2, **dadurch gekennzeichnet, dass** die Nachrichten mit einer Zeitmarke von der weiteren Steuer- und/oder Regeleinheit (ECU) (18, 19, 20) periodisch, insbesondere zeitäquidistant, versendet werden.

4. Bremssystem (50) nach einem der Ansprüche 1 bis 3, **dadurch gekennzeichnet, dass** die dem elektromechanischen Aktuator (11, 12) zugeordnete elektronische Steuer- und/oder Regeleinheit (WCU) (18, 19, 20), insbesondere ausschließlich, unmittelbar nach dem Empfang einer Nachricht mit Zeitmarke ihrerseits eine Nachricht versendet.

5. Bremssystem (50) nach einem der Ansprüche 1 bis 4, **dadurch gekennzeichnet, dass** die Loop-Zeit des Datenverarbeitungsprogramms zur Steuerung bzw. Regelung des elektromechanischen Aktuators (11, 12) in Abhängigkeit von den empfangenen Zeitmarken für eine vorgegebene Anzahl von Loops verkürzt oder verlängert wird.

6. Bremssystem (50) nach einem der Ansprüche 1 bis 5, **gekennzeichnet durch** Raddrehzahlsensoren, deren Signale der zentralen elektronischen oder elektrohydraulischen Steuer- und/oder Regeleinheit (ECU) (5) und/oder den elektronischen Steuer- und Regeleinheiten (WCU) (18, 19, 20) der elektromechanischen Aktuatoren (11, 12) zugeführt werden.

7. Bremssystem (50) nach einem der Ansprüche 1 bis 6, **gekennzeichnet durch** eine zentrale elektronische oder elektrohydraulische Steuer- und/oder Regeleinheit (ECU) (5) und mindestens zwei jeweils **durch** einen elektromechanischen Aktuator (11, 12) betätigbare Radbremsen (7, 8, 9, 10), mit jeweils einer den elektromechanischen Aktuatoren (11, 12) zugeordneten elektronischen Steuer- und/oder Regeleinheit (WCU) (18, 19, 20), wobei jede den elektromechanischen Aktuatoren (11, 12) zugeordnete elektronische Steuer- und/oder Regeleinheit (WCU) (18, 19, 20) mittelbar oder unmittelbar über den Datenbus mit der zentralen Steuer- und/oder Regeleinheit (ECU) verbunden ist.

8. Bremssystem (50) nach einem der Ansprüche 1 bis 7, **gekennzeichnet durch** zwei einer zweiten Fahrzeugachse zugeordnete, **durch** elektromechanische Aktuatoren (11, 12) betätigbare Radbremsen (7, 8, 9, 10) sowie zwei einer ersten Fahrzeugachse zugeordnete, elektromechanisch oder hydraulisch betätigbare Radbremsen (7, 8, 9, 10), wobei die zentrale elektronische oder elektrohydraulische Steuer- und/oder Regeleinheit (ECU) (5) zum Regeln der der ersten Fahrzeugachse zugeordneten Radbremsen (7, 8, 9, 10) ausgebildet ist.

9. Verfahren zum Betrieb eines elektronischen Bremssystems (50), insbesondere eines Kraftfahrzeugs (60), welches mindestens eine durch einen elektromechanischen Aktuator (11, 12) betätigbare Radbremse (7, 8, 9, 10) und einem Datenbus, insbesondere einem CAN (Controller Area Network)-Datenbus, umfasst, wobei dem elektromechanischen Aktuator (11, 12) eine elektronische Steuer- und/oder Regeleinheit (WCU) (18, 19, 20) zugeordnet ist, in welcher ein Datenverarbeitungsprogramm zur Steuerung bzw. Regelung des elektromechanischen Aktuators (11, 12) ausgeführt wird, und wobei die dem elektromechanischen Aktuator (11, 12) zugeordnete elektronische Steuer- und/oder Regeleinheit (WCU) (18, 19, 20) mit mindestens einer weiteren Steuer- und/oder Regeleinheit (ECU) über den Datenbus verbunden ist, wobei die Loop-Zeit des Datenverarbeitungsprogramms zur Steuerung und/oder Regelung des elektromechanischen Aktuators (11, 12) über den Datenbus veränderbar ist und wobei die Loop-Zeit des Datenverarbeitungsprogramms zur Steuerung bzw. Regelung des elektromechanischen Aktuators (11, 12) an Nachrichten mit Zeitmarken, welche über den Datenbus empfangen werden, angepasst wird, **dadurch gekennzeichnet, dass** zur Anpassung der Loop-Zeit des Datenverarbeitungsprogramms die Ankunftszeit einer Nachricht mit Zeitmarke mit einem vorgegebenen Ankunftszeitfenster der Loop-Zeit des Datenverarbeitungsprogramms in der dem elektromechanischen Aktuator (11, 12) zugeordneten elektronischen Steuer- und/oder Regeleinheit (WCU) (18, 19, 20) verglichen wird.

10. Verfahren nach Anspruch 9, **dadurch gekennzeichnet, dass** die Nachrichten mit einer Zeitmarke von der weiteren Steuer- und/oder Regeleinheit (ECU), insbesondere von einer zentralen elektronischen oder elektrohydraulischen Steuer- und/oder Regeleinheit (5), periodisch, insbesondere zeitäquidistant, versendet werden.

11. Verfahren nach Anspruch 9 oder 10, **dadurch gekennzeichnet, dass** die dem elektromechanischen Aktuator (11, 12) zugeordnete elektronische Steuer- und/oder Regeleinheit (WCU) (18, 19, 20), insbesondere ausschließlich, unmittelbar nach dem Empfang einer Nachricht mit Zeitmarke ihrerseits eine Nachricht versendet.

12. Verfahren nach einem der Ansprüche 9 bis 11, **dadurch gekennzeichnet, dass** die Loop-Zeit des Datenverarbeitungsprogramms zur Steuerung bzw. Regelung des elektromechanischen Aktuators (11, 12) in Abhängigkeit von den empfangenen Zeitmarken und/oder dem Ergebnis des Vergleichs mit dem vorgegebenen Ankunftszeitfenster für eine vorgegebene Anzahl von Loops verkürzt oder verlängert wird.

13. Kraftfahrzeug mit einem Bremssystem (50) nach einem der Ansprüche 1 bis 8.

## Claims

1. Electronic brake system (50), in particular for motor vehicles (60), comprising at least one wheel brake (7, 8, 9, 10) which can be activated by an electromechanical actuator (11, 12), wherein an electronic open-loop and/or closed-loop control unit (WCU) (18, 19, 20), in which a data processing program for performing open-loop and/or closed-loop control of the electromechanical actuator (11, 12) is executed, is assigned to the electromechanical actuator (11, 12), and comprising a databus, in particular a CAN (Controller Area Network) databus with which the electronic open-loop and/or closed-loop control unit (WCU) (18, 19, 20) which is assigned to the electromechanical actuator (11, 12) is connected to at least one further open-loop and/or closed-loop control unit (ECU), in particular a central electronic or electrohydraulic open-loop and/or closed-loop control unit (5), wherein the loop time of the data processing program for performing open-loop and/or closed-loop control of the electromechanical actuator (11, 12) can be changed by means of the databus and wherein the electronic open-loop and/or closed-loop control unit (WCU) (18, 19, 20) which is assigned to the electromechanical actuator (11, 12) comprises a means which adapts the loop time of the data processing program for performing open-loop and/or closed-loop control of the electromechanical actuator (11, 12) to the arrival of messages which have a time stamp and are received via the databus, **characterized in that**, in order to adapt the loop time of the data processing program in the electronic open-loop and/or closed-loop control unit (WCU) (18, 19, 20) which is assigned to the electromechanical actuator (11, 12), the arrival time of a message with a time stamp is compared with a predefined arrival time window of the loop time of the data processing program.

2. Brake system (50) according to Claim 1, **characterized in that** the messages with a time stamp additionally comprise further data.

3. Brake system (50) according to Claim 1 or 2, **characterized in that** the messages with a time stamp are sent periodically, in particular at equidistant times, by the further open-loop and/or closed-loop control unit (ECU) (18, 19, 20).

4. Brake system (50) according to one of Claims 1 to 3, **characterized in that** the electronic open-loop and/or closed-loop control unit (WCU) (18, 19, 20), which is assigned to the electromechanical actuator (11, 12), itself sends a message, in particular exclusively, immediately after the reception of a message with a time stamp.

5. Brake system (50) according to one of Claims 1 to 4, **characterized in that** the loop time of the data processing program for performing open-loop and/or closed-loop control of the electromechanical actuator (11, 12) is shortened or lengthened as a function of the received time stamps for a predefined number of loops.

6. Brake system (50) according to one of Claims 1 to 5, **characterized by** wheel speed sensors whose signals are fed to the central electronic or electrohydraulic open-loop and/or closed-loop control unit (ECU) (5) and/or the electronic open-loop and closed-loop control units (WCU) (18, 19, 20) of the electromechanical actuators (11, 12).

7. Brake system (50) according to one of Claims 1 to 6, **characterized by** a central electronic or electrohydraulic open-loop and/or closed-loop control unit (ECU) (5) and at least two wheel brakes (7, 8, 9, 10) which can each be activated by an electromechanical actuator (11, 12) and each have an electronic open-loop and/or closed-loop control unit (WCU) (18, 19, 20) which is assigned to the electromechanical actuators (11, 12), wherein each electronic open-loop and/or closed-loop control unit (WCU) (18, 19, 20) which is assigned to the electromechanical actuators (11, 12) is indirectly or directly connected to the central open-loop and/or closed-loop control unit (ECU) via the databus.

8. Brake system (50) according to one of Claims 1 to 7, **characterized by** two wheel brakes (7, 8, 9, 10) which are assigned to a second vehicle axle and can be activated by electromechanical actuators (11, 12), as well as two wheel brakes (7, 8, 9, 10) which are assigned to a first vehicle axle and can be activated electromechanically or hydraulically, wherein the central electronic or electrohydraulic open-loop and/or closed-loop control unit (ECU) (5) is designed to perform closed-loop control of the wheel brakes (7, 8, 9, 10) which are assigned to the first vehicle axle.

9. Method for operating an electronic brake system (50), in particular of a motor vehicle (60), which comprises at least one wheel brake (7, 8, 9, 10) which can be activated by an electromechanical actuator (11, 12), and a databus, in particular a CAN (Controller Area Network) databus, wherein an electronic open-loop and/or closed-loop control unit (WCU) (18, 19, 20), in which a data processing program for performing open-loop and/or closed-loop control of the electromechanical actuator (11, 12) is executed, is assigned to the electromechanical actuator (11, 12), and wherein the electronic open-loop and/or closed-loop control unit (WCU) (18, 19, 20), which is assigned to the electromechanical actuator (11, 12), is connected to at least one further open-loop and/or closed-loop control unit (ECU) via the databus, wherein the loop time of the data processing program for performing open-loop and/or closed-loop control of the electromechanical actuator (11, 12) can be changed by means of the databus and wherein the loop time of the data processing program for performing open-loop and/or closed-loop control of the electromechanical actuator (11, 12) is adapted to messages which have time stamps and which are received via the databus, **characterized in that**, in order to adapt the loop time of the data processing program, the arrival time of a message with a time stamp is compared with a predefined arrival time window of the loop time of the data processing program in the electronic open-loop and/or closed-loop control unit (WCU) (18, 19, 20) which is assigned to the electromechanical actuator (11, 12).

10. Method according to Claim 9, **characterized in that** the messages with a time stamp are sent periodically, in particular at equidistant times, by the further open-loop and/or closed-loop control unit (ECU), in particular by a central electronic or electrohydraulic open-loop and/or closed-loop control unit (5).

11. Method according to Claim 9 or 10, **characterized in that** the electronic open-loop and/or closed-loop control unit (WCU) (18, 19, 20), which is assigned to the electromechanical actuator (11, 12), itself sends a message, in particular exclusively, immediately after the reception of a message with a time stamp.

12. Method according to one of Claims 9 to 11, **characterized in that** the loop time of the data processing program for performing open-loop and/or closed-loop control of the electromechanical actuator (11, 12) is shortened or lengthened as a function of the received time stamps and/or the result of the comparison with the predefined arrival time window for a predefined number of loops.

13. Motor vehicle having a brake system (50) according to one of Claims 1 to 8.

## Revendications

1. Système électronique de freinage (50), en particulier pour véhicules automobiles (60), le système présentant
au moins un frein de roue (7, 8, 9, 10) apte à être actionné par un actionneur électromécanique (11, 12),
une unité électronique de commande et/ou de régulation (WCU) (18, 19, 20) associée à l'actionneur électromécanique (11, 12) et dans laquelle un programme de traitement de données est exécuté pour commander ou réguler l'actionneur électromécanique (11, 12) et
un bus de données, en particulier un bus de données CAN ("Controller Area Network") par lequel l'unité de commande et/ou de régulation (WCU) (18, 19, 20) associée à l'actionneur électromécanique (11, 12) est raccordée à au moins une autre unité de commande et/ou de régulation (ECU), en particulier une unité centrale électronique ou électrohydraulique de commande et/ou de régulation (5),
la durée de boucle du programme de traitement de données qui assure la commande et/ou la régulation de l'actionneur électromécanique (11, 12) par l'intermédiaire du bus de données pouvant être modifiée et l'unité électronique de commande et/ou de régulation (WCU) (18, 19, 20) associée à l'actionneur électromécanique (11, 12) comprenant un moyen qui adapte la durée de boucle du programme de traitement de données qui assure la commande et/ou la régulation de l'actionneur électromécanique (11, 12) à l'arrivée de messages dotés d'un repère temporel et reçus par l'intermédiaire du bus de données,
**caractérisé en ce que**
pour adapter la durée de boucle du programme de traitement de données dans l'unité électronique de commande et/ou de régulation (WCU) (18, 19, 20) associée à l'actionneur électromécanique (11, 12), l'instant d'arrivée d'un message doté d'un repère temporel est comparé à une fenêtre prédéterminée d'instants d'arrivée de la durée de boucle du programme de traitement de données.

2. Système de freinage (50) selon la revendication 1, **caractérisé en ce que** les messages dotés d'un repère temporel comprennent d'autres données supplémentaires.

3. Système de freinage (50) selon les revendications 1 ou 2, **caractérisé en ce que** les messages dotés d'un repère temporel sont envoyés périodiquement et en particulier à intervalles constants par l'autre unité de commande et/ou de régulation (ECU) (18, 19, 20).

4. Système de freinage (50) selon l'une des revendications 1 à 3, **caractérisé en ce que** l'unité électronique de commande et/ou de régulation (WCU) (18, 19, 20) associée à l'actionneur électromécanique (11, 12) envoie en particulier exclusivement un message immédiatement après la réception d'un message doté d'un repère temporel.

5. Système de freinage (50) selon l'une des revendications 1 à 4, **caractérisé en ce que** la durée de boucle du programme de traitement de données qui assure la commande et/ou la régulation de l'actionneur électromécanique (11, 12) est raccourcie ou prolongée pour un nombre prédéterminé de boucles en fonction des repères temporels reçus.

6. Système de freinage (50) selon l'une des revendications 1 à 5, **caractérisé par** des capteurs de vitesse de rotation des roues dont les signaux sont envoyés à l'unité centrale électronique ou électrohydraulique de commande et/ou de régulation (ECU) (5) ou à l'unité électronique de commande et/ou de régulation (WCU) (18, 19, 20) associée aux actionneurs électromécaniques (11, 12).

7. Système de freinage (50) selon l'une des revendications 1 à 6, **caractérisé par** une unité centrale électronique ou électrohydraulique de commande et/ou de régulation (ECU) (5) et au moins deux freins de roue (7, 8, 9, 10) aptes à être actionnés chacun par un actionneur électromécanique (11, 12), avec chaque fois une unité électronique de commande et/ou de régulation (WCU) (18, 19, 20) associée aux actionneurs électromécaniques (11, 12), chaque unité électronique de commande et/ou de régulation (WCU) (18, 19, 20) associée aux actionneurs électromécaniques (11, 12) étant raccordée directement ou indirectement à l'unité centrale de commande et/ou de régulation (ECU) par l'intermédiaire du bus de données.

8. Système de freinage (50) selon l'une des revendications 1 à 7, **caractérisé par** deux freins de roue (7, 8, 9, 10) associés à un deuxième essieu du véhicule et aptes à être actionnés par des actionneurs électromécaniques (11, 12), ainsi que deux freins de roue (7, 8, 9, 10) associés à un premier essieu du véhicule et aptes à être actionnés électromécaniquement ou hydrauliquement, l'unité centrale électronique ou électrohydraulique de commande et/ou de régulation (ECU) (5) étant configurée pour réguler les freins de roue (7, 8, 9, 10) associés au premier essieu du véhicule.

9. Procédé de conduite d'un système électronique de freinage (50), en particulier d'un véhicule automobile (60), le système présentant
au moins un frein de roue (7, 8, 9, 10) apte à être actionné par un actionneur électromécanique (11, 12), et un bus de données, en particulier un bus de données CAN ("Controller Area Network"),
une unité électronique de commande et/ou de régulation (WCU) (18, 19, 20) étant associée à l'actionneur électromécanique (11, 12) et dans laquelle un programme de traitement de données est exécuté pour commander ou réguler l'actionneur électromécanique (11, 12) et
l'unité de commande et/ou de régulation (WCU) (18, 19, 20) associée à l'actionneur électromécanique (11, 12) étant raccordée à au moins une autre unité de commande et/ou de régulation (ECU) par le bus de données,
la durée de boucle du programme de traitement de données qui assure la commande et/ou la régulation de l'actionneur électromécanique (11, 12) par l'intermédiaire du bus de données pouvant être modifiée et la durée de boucle du programme de traitement de données qui assure la commande et/ou la régulation de l'actionneur électromécanique (11, 12) étant adaptée à des messages dotés d'un repère temporel et reçus par l'intermédiaire du bus de données,
**caractérisé en ce que**
pour adapter la durée de boucle du programme de traitement de données, l'instant d'arrivée d'un message doté d'un repère temporel est comparé à une fenêtre prédéterminée d'instants d'arrivée de la durée de boucle du programme de traitement de données dans l'unité électronique de commande et/ou de régulation (WCU) (18, 19, 20) associée à l'actionneur électromécanique (11, 12).

10. Procédé selon la revendication 9, **caractérisé en ce que** les messages dotés d'un repère temporel sont envoyés périodiquement et en particulier à intervalles constants par l'autre unité de commande et/ou de régulation (ECU), en particulier par une unité centrale électronique ou électrohydraulique de commande et/ou de régulation (5).

11. Procédé selon les revendications 9 ou 10, **caractérisé en ce que** l'unité électronique de commande et/ou de régulation (WCU) (18, 19, 20) associée à l'actionneur électromécanique (11, 12) envoie elle-même, en particulier exclusivement, un message immédiatement après la réception d'un message doté d'un repère temporel.

12. Procédé selon les revendications 9 à 11, **caractérisé en ce que** la durée de boucle du programme de traitement de données qui assure la commande et/ou la régulation de l'actionneur électromécanique (11, 12) est raccourcie ou prolongée pour un nombre prédéterminé de boucles en fonction des repères temporels reçus et/ou du résultat de la comparaison avec la fenêtre prédéterminée d'instants de réception.

13. Véhicule automobile doté d'un système de freinage (50) selon l'une des revendications 1 à 8.
